# EUROPÄISCHE PATENTSCHRIFT

(11) **EP 1 098 695 B1**
(45) Veröffentlichungstag und Bekanntmachung des Hinweises auf die Patenterteilung: **04.12.2002**
(21) Anmeldenummer: 99931225.9
(22) Anmeldetag: 01.07.1999
(51) Int. Cl.: B01J 8/00, B01J 8/24, F27B 15/02

(54) **VERFAHREN ZUM ENTFERNEN VON RELATIV GROBKÖRNIGEN FESTSTOFFEN AUS EINEM STATIONÄREN WIRBELBETT**
METHOD FOR REMOVING COARSE-GRAINED SOLIDS FROM A STATIONARY FLUIDIZED BED
PROCEDE PERMETTANT DE ENLEVER DES SOLIDES DE GRANULOMETRIE RELATIVEMENT IMPORTANTE D'UN LIT FLUIDISE STATIONNAIRE

(30) Priorität: 08.07.1998 DE 19830697
(43) Veröffentlichungstag der Anmeldung: 16.05.2001
(73) Patentinhaber: Outokumpu Oyj, 02200 Espoo (FI)
(72) Erfinder: HIRSCH, Martin, D-61381 Friedrichsdorf (DE); ORTH, Andreas, D-61381 Friedrichsdorf (DE); WEBER, Peter, D-63546 Hammersbach (DE)
(74) Vertreter: KEIL & SCHAAFHAUSEN
(86) Internationale Anmeldenummer: EP9904526
(87) Internationale Veröffentlichungsnummer: WO00002654

(56) Entgegenhaltungen:
- EP-A- 0 728 714
- FR-A- 2 159 182
- GB-A- 622 864

## Beschreibung

Die Erfindung betrifft ein Verfahren zum Entfernen von relativ grobkörnigen Feststoffen aus einem stationären Wirbelbett, welches Feststoffe mit unterschiedlichen Korngrößen enthält, wobei man Fluidisierungsgas von unten, durch einen Düsenrost verteilt, in das Wirbelbett leitet.

Stationäre Wirbelbetten dieser Art sind ganz allgemein bekannt, sie zeichnen sich durch eine mehr oder weniger genau definierte Bettoberfläche aus, die sich etwa wie eine kochende Flüssigkeit bewegt. Bei längerem Betrieb des Wirbelbettes reichern sich Feststoffe mit relativ großer Korngröße im unteren Bereich des Bettes über dem Düsenrost an, da sie nicht oder kaum fluidisiert werden. Diese Anreicherung von Grobkorn kann in vielen Fällen störend sein, da sie zum Beispiel zu unterschiedlichen Verweilzeiten der Feststoffe im Wirbelbett und auch zu Überhitzungen und Versinterungen in der Nähe des Düsenrostes führen kann. Der Abzug dieses Grobkorns unter Schwerkraftwirkung nach unten durch den Düsenrost oder seitlich durch die Behälterwand macht einen erheblichen apparativen und regeltechnischen Aufwand nötig.

Der Erfindung liegt die Aufgabe zugrunde, die sich im unteren Bereich eines stationären Wirbelbettes anreichernden, relativ grobkörnigen Feststoffe auf einfache Weise mindestens teilweise entfernen zu können. Erfindungsgemäß gelingt dies beim eingangs genannten Verfahren dadurch, daß man durch mindestens einen vom Fludisierungsgas getrennt zugeführten, aufwärts gerichteten Gasstrahl einen Teil der über dem Düsenrost befindlichen Feststoffe in ein Förderrohr bläst und diese Feststoffe durch das Förderrohr pneumatisch aus dem Wirbelbett führt. Da sich direkt über dem Düsenrost die relativ grobkörnigen Feststoffe anreichern, werden diese, soweit sie sich in unmittelbarer Nähe der Eintrittsöffnung des Förderrohrs befinden, zusammen mit dort befindlichem Feinkorn durch das Förderrohr aus dem Wirbelbett herausgeblasen. Die so herausgeförderten Feststoffe können außerhalb des Wirbelbettes zum Beispiel durch Siebung in Grob- und Feinkorn getrennt werden, wobei man zum Beispiel das Feinkorn direkt wieder in das Wirbelbett zurückführt und das Grobkorn zunächst zerkleinert oder es in einem zweiten Behälter einer speziellen Behandlung unterzieht.

Die Feststoffe im Wirbelbett können eine beliebige Temperatur aufweisen, das Kornspektrum kann Korngrößen etwa im Bereich von 0,1 bis 10 mm haben, doch gibt es für das Verfahren keine zwingenden Körnungsgrenzen.

Die Gasgeschwindigkeiten des Fluidisierungsgases liegen üblicherweise im Bereich von 0,1 bis 1 m/sec, wobei diese Zahlen hier, wie im folgenden, als Leerrohrgeschwindigkeiten gemessen werden. Ein oder mehrere Gasstrahlen werden von unten aufwärts gegen die Eintrittsöffnung des Förderrohrs gerichtet, sie reißen die Feststoffe mit und führen sie durch das Förderrohr, durch welches sie das Wirbelbett verlassen. Die Gasgeschwindigkeiten im Förderrohr sind üblicherweise mindestens doppelt so hoch wie die Geschwindigkeit des Fluidisierungsgases im Wirbelbett. Üblicherweise liegen die Gasgeschwindigkeiten im Förderrohr zwei- bis fünfmal so hoch wie im Wirbelbett.

Es kann ausreichen, im Wirbelbett ein einziges Förderrohr mit mindestens einem zugehörigen, von unten kommenden Gasstrahl zu installieren, doch können durchaus auch mehrere Förderrohre an unterschiedlichen Stellen im Wirbelbett angeordnet sein, denen jeweils mindestens ein Gasstrahl zugeordnet ist.

Ausgestaltungsmöglichkeiten des Verfahrens werden mit Hilfe der Zeichnung erläutert, es zeigt:
- Fig. 1: in schematischer Darstellung einen vertikalen Schnitt entlang der Linie II - II in Fig. 2 durch einen Wirbelbettreaktor,
- Fig. 2: einen horizontalen Schnitt nach der Linie I - I durch den Reaktor der Fig. 1 und
- Fig. 3: einen vertikalen Schnitt durch einen Wirbelbettreaktor mit zwei Förderrohren.

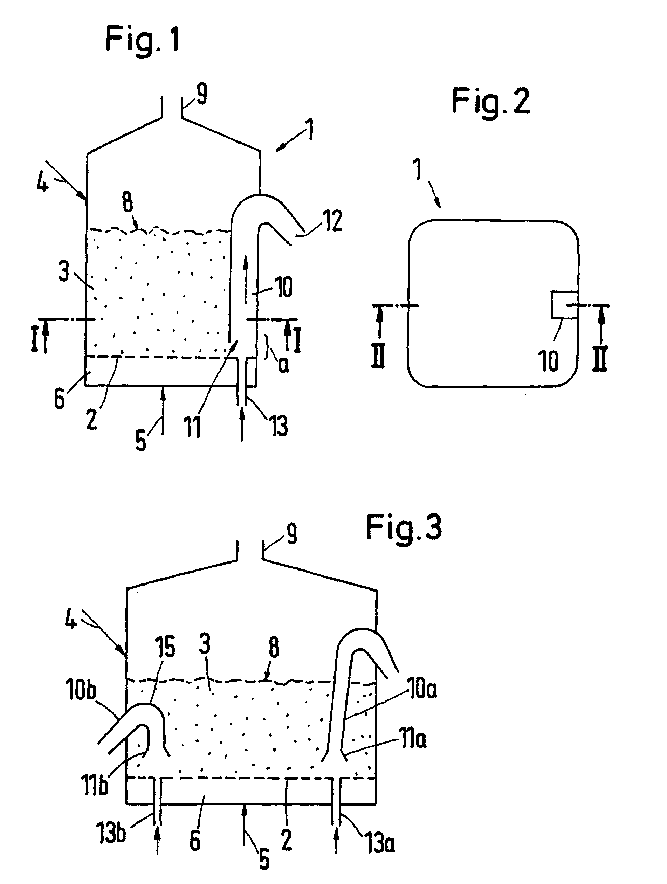

Der Reaktor (1) der Fig. 1 und 2 weist über einem Düsenrost (2) ein stationäres Wirbelbett (3) auf. Feststoffe mit unterschiedlichen Korngrößen werden durch die Leitung (4) in den Reaktor gegeben, und Fluidisierungsgas wird durch die Leitung (5) herangeführt. Das Fluidisierungsgas tritt zunächst in eine Verteilkammer (6) ein, bevor es durch den Düsenrost (2) in das Wirbelbett (3) strömt. Das Wirbelbett weist eine Feststoffoberfläche (8) auf, durch die das Gas nach oben austritt, wobei ein gewisser Teil der feinkörnigen Feststoffe mitgeführt wird. Durch den Auslaß (9) verläßt das Gas den Reaktor und wird zum Beispiel einer nicht dargestellten Entstaubung zugeführt.

An der Wand des Reaktors (1), vergleiche Fig. 1 und 2, ist ein Förderrohr (10) angeordnet, welches eine Eintrittsöffnung (11) und einen Auslaß (12) aufweist. Die Eintrittsöffnung (11) liegt um die vertikale Strecke (a) über dem Düsenrost (2), wobei (a) üblicherweise 10 bis 500 mm beträgt. Unter dem Förderrohr (10) und auch unmittelbar unter dem Düsenrost (2) befindet sich eine vertikale Gasleitung (13), durch die in nicht dargestellter Weise ein Gasstrahl von unten aufwärts durch die Eintrittsöffnung (11) in das Förderrohr (10) geblasen wird. Das obere Ende der Leitung (13) befindet sich etwa auf der Höhe des Düsenrostes (2), so daß Feststoffe aus dem Wirbelbett (3) ständig in den Wirkungsbereich des Gasstrahls fließen, der sie in das Förderrohr (10) hineinträgt und zum Auslaß (12) führt. Es kann zweckmäßig sein, die durch den Auslaß (12) kommenden Feststoffe, die relativ grobkörnig sind, einer Zerkleinerung oder aber einem nicht dargestellten zweiten Wirbelbett zuzuführen. Der Feinkornanteil der Feststoffe kann zuvor abgesiebt werden.

Die Zahl der im Wirbelbett eines Reaktors installierten Förderrohre ist beliebig wählbar. In Fig. 3 sind zwei Förderrohre (10a) und (10b) dargestellt, denen jeweils Gasleitungen (13a) und (13b) zugeordnet sind. Das Förderrohr (10a) ist etwas schräg nach oben geführt, und es ragt über die Wirbelbett-Oberfläche (8) hinaus. Demgegenüber liegt die obere Krümmung (15) des Förderrohrs (10b) im Wirbelbett (3) unterhalb dessen Oberfläche (8). Die Eintrittsöffnungen (11a) und (11b) der beiden Förderrohre der Fig. 3 sind nach unten etwas trichterförmig aufgeweitet, doch ist dies nicht unbedingt nötig. Die übrigen Bezugsziffern der Fig. 3 haben die bereits zusammen mit Fig. 1 und 2 erläuterte Bedeutung.

### Beispiel:

In einen kontinuierlich betriebenen Wirbelschichtreaktor, der gemäß Fig. 1 und 2 ausgebildet ist, werden 1125 kg/h Quarzsand aufgegeben. 90 Gew.-% des Sandes haben eine Körnung von 0,1 - 0,4 mm, 10 Gew.-% des Sandes eine Körnung von 0,5 bis 2,2 mm. Der Düsenrost (2) hat eine Fläche von 4,2 m², die Betthöhe beträgt 0,6 m. Zum Fluidisieren dient Luft, deren Leerrohrgeschwindigkeit im Bettbereich 0,2 m/s beträgt. Die dem Förderrohr (10) durch die Leitung (13) zugeführte Luft hat im Bereich der Mündung (11) eine Leerrohrgeschwindigkeit von 0,6 m/s. Das Förderrohr hat eine Querschnittsfläche von 166 cm², sein Abstand (a) vom Düsenrost beträgt 100 mm.

Während eines Betriebs von 4 Stunden Dauer wird der durch das Förderrohr herausgeblasene Sand in einem Behälter gesammelt. Die Gesamtmenge dieses Sandes beträgt 270 kg, davon haben 180 kg (= 66,7 Gew.-%) eine Körnung von 0,5 - 2,2 mm, so daß also Grobkorn bevorzugt ausgetragen worden ist.

## Patentansprüche

1. Verfahren zum Entfernen von körnigen Feststoffen aus einem stationären Wirbelbett, welches Feststoffe mit unterschiedlichen Korngrößen enthält, wobei man Fluidisierungsgas von unten, durch einen Düsenrost verteilt, in das Wirbelbett leitet, wobei sich im Wirbelbett oberhalb des Düsenrostes ein Förderrohr befindet, in welchem ein in das Förderrohr gerichteter Gasstrahl Feststoffe durch das Förderrohr pneumatisch aufwärts und aus dem Wirbelbett führt, **dadurch gekennzeichnet, daß** sich die Eintrittsöffnung (11, 11a, 11b) des Förderrohrs (10, 10a, 10b) 10 bis 500 mm über dem Düsenrost (2) befindet, daß eine vertikale Gasleitung (13) im Abstand unter der Eintrittsöffnung angeordnet ist, deren oberes Ende sich etwa auf der Höhe des Düsenrostes befindet, daß durch einen Gasstrahl aus der Gasleitung (13) in die Eintrittsöffnung des Förderrohrs bevorzugt grobkörnige Feststoffe durch das Förderrohr pneumatisch aus dem Wirbelbett geführt werden, wobei die Gasgeschwindigkeit im Förderrohr mindestens doppelt so hoch wie die des Fluidisierungsgases im Wirbelbett ist, und daß die Feststoffe aufwärts bis zu einer Krümmung (15) des Förderrohrs und dann abwärts zu einem Auslaß (12) gefördert werden.

2. Verfahren nach Anspruch 1, **dadurch gekennzeichnet, daß** die aus dem Wirbelbett durch das Förderrohr herausgeführten Feststoffe in ein zweites Wirbelbett geleitet werden.

## Claims

1. A process of removing granular solids from a stationary fluidized bed which contains solids of different grain sizes, wherein fluidizing gas is introduced into the fluidized bed from the bottom, distributed through a jet bank, where a conveying tube is disposed in the fluidized bed above the jet bank, in which conveying tube a gas jet directed into the conveying tube pneumatically carries solids upwards through the conveying tube and out of the fluidized bed, **characterized in that** the inlet opening (11, 11a, 11b) of the conveying tube (10, 10a, 10b) is disposed 10 to 500 mm above the jet bank (2), that a vertical gas line (13) is disposed at a distance below the inlet opening, the upper end of said gas line being disposed approximately at the level of the jet bank, that by a gas jet from the gas line (13) into the inlet opening of the conveying tube coarse-grained solids are preferably pneumatically discharged from the fluidized bed through the conveying tube, the gas velocity in the conveying tube being at least twice as high as that of the fluidizing gas in the fluidized bed, and that the solids are supplied upwards to a bend (15) of the conveying tube and then downwards to an outlet (12).

2. The process as claimed in claim 1, **characterized in that** the solids discharged from the fluidized bed through the conveying tube are introduced into a second fluidized bed.

## Revendications

1. Procédé permettant d'enlever des solides granuleux d'un lit fluidizé stationnaire contenant des solides d'un grain size différent en conduisant de gaz fluidisant dans le lit fluidisé par le bas de manière distribuée par une grille diffuseuse, un tuyau transporteur étant disposé sur la grille diffuseuse dans laquelle un jet de gaz dirigé vers le tuyau transporteur mène des solides dans une manière pneumatique en haut à travers de tuyau transporteur, les versant du lit fluidizé,
**caractérisé en ce que** le canal d'admission (11,11a, 11b) du tuyau transporteur (10, 10a, 10b) se trouve à une distance de 10 à 500 mm en amont de la grille diffuseuse (2), qu'une conduite de gaz (13) verticale est disposée à une distance par le bas du canal d'admission l'extrémité supérieure duquel se trouvant à peu prêt au niveau de la grille diffuseuse, que des solides préférablement à gros grains, par un jet de gaz de la conduite de gaz (13) dans le canal d'admissuion, sont versés de manière pneumatique à travers de tuyau transporteur du lit fluidizé, la vitesse de gaz dans le tuyau transporteur étant au moins deux fois comme celle du gaz fluidisé dans le lit fluidisé, et que les solides sont transportés en haut jusqu'une courbure (15) du tuyau transporteur et après par le bas à un canal d'émission (12).

2. Procédé selon la revendication 1, **caractérisé en ce que** les solides conduits de lit fluidisé à tavers de tuyau transporteur sont menés dans un lit fluidisé seconde.
